Europäisches Patentamt

European Patent Office

Office européen des brevets

(11) Numéro de publication: **0 217 844**
**B1**

(12) FASCICULE DE BREVET EUROPEEN

(45) Date de publication du fascicule du brevet: 23.05.90

(51) Int. Cl.⁵: **G 02 F 1/133**

(21) Numéro de dépôt: **86901894.5**

(22) Date de dépôt: **13.03.86**

(86) Numéro de dépôt international:
**PCT/FR86/00084**

(87) Numéro de publication internationale:
**WO 86/05893 09.10.86 Gazette 86/22**

(54) **PROCEDE DE FABRICATION D'UN ECRAN D'AFFICHAGE A CRISTAUX LIQUIDES ET A RESEAU DE DIODES.**

(30) Priorité: **26.03.85 FR 8504480**

(43) Date de publication de la demande:
**15.04.87 Bulletin 87/16**

(45) Mention de la délivrance du brevet:
**23.05.90 Bulletin 90/21**

(84) Etats contractants désignés:
**BE DE GB IT NL SE**

(56) Documents cités:
**EP-A-0 150 728
EP-A-01 035 23
FR-A-23 851 65
FR-A-25 187 88
FR-A-25 519 02**

**Japan Disply 1983, 1983, N. Szijdlo et al.:
"Integrated matrix addressed LCD using
amorphous silicon back to back diodes", pages
416-418
Patents Abstracts of Japan, vol. 7, no 238,
(P-231)(1383), 22 October 1983, & JP-A-
58126518**

(73) Titulaire: **Morin, François
Le Carpont Lanmerin
F-22300 Lannion (FR)**
(73) Titulaire: **Le Contellec, Michel
43, Résidence du Roux
F-22300 Lannion (FR)**

(72) Inventeur: **Morin, François
Le Carpont Lanmerin
F-22300 Lannion (FR)**
Inventeur: **Le Contellec, Michel
43, Résidence du Roux
F-22300 Lannion (FR)**

(74) Mandataire: **Mongrédien, André et al
c/o BREVATOME 25, rue de Ponthieu
F-75008 Paris (FR)**

Courier Press, Leamington Spa, England.

**Description**

La présente invention a pour objet un procédé de fabrication d'un écran d'affichage à cristaux liquides et à réseau de diodes.

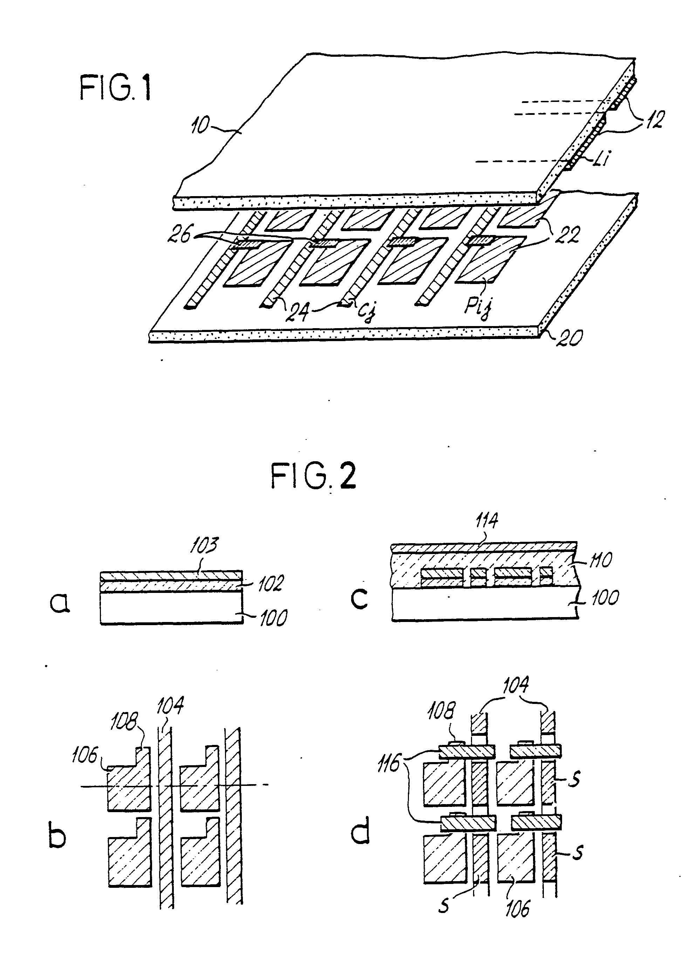

La figure 1 annexée représente un écran d'affichage d'un type connu qui est constitué d'une plaque supérieure 10 recouverte de bandes conductrices transparentes 12 orientées selon des lignes parallèles et d'une plaque inférieure 20 recouverte d'une matrice de pavés 22 et de bandes conductrices transparentes 24 orientées selon des colonnes parallèles. Ces deux plaques sont assemblées et maintenues écartées par une cale d'épaisseur et un cristal liquide est introduit dans l'espace qui les sépare. Chaque pavé constitue une zone élémentaire d'affichage (ou "point"). Un pavé est relié électriquement à la colonne adjacente par un pont 26. L'excitation d'un point Pij de la matrice s'obtient par application de tensions appropriées sur la ligne Li de la plaque supérieure et sur la colonne Cj de la plaque inférieure.

Plusieurs modes de réalisation des ponts 26 sont connus. Certains font appel à des transistors (et notamment à des transistors en couches minces); d'autres utilisent des éléments non linéaires comme des diodes, ce qui permet d'augmenter le nombre de lignes et de colonnes adressables, donc le nombre de points d'affichage.

La présente invention a trait à un procédé de fabrication d'un tel écran, et porte plus spécialement sur la réalisation des ponts 26 dans la variante utilisant des diodes.

Dans l'art antérieur, on connaît essentiellement trois types différents de ponts à diodes:

1. Dans l'article intitulé "Integrated Matrix Addressed LCD Amorphous Silicon Back to Back Diodes" publié par N.SZYDLO et al. dans "Japan Display" 1983, pp. 416—418, il est décrit un pont comprenant deux diodes montées dos à dos ("back to back diodes"). Le pont est formé d'une couche de a-Si:H dopé n$^+$, d'une couche de a-Si:H non dopé ou légèrement dopé, d'une couche d'isolant percée de deux ouvertures et de deux plots métalliques (en platine) traversant les ouvertures et formant contacts Schottky avec la couche de a-Si:H.

2. Dans l'article intitulé "A 210×228 Matrix LCD Controlled by Double Stage Diode Rings" publié par Sergo Togashi et al. dans la revue ... pp. 141—144, il est décrit un pont comprenant deux diodes en parallèle formant un anneau; chaque diode est de type p-i-n et comprend une couche d'oxyde d'indium et d'étain (ITO), une couche de chrome, un empilement de a-Si dopé p, de a:Si intrinsèque et de a:Si dopé n, une couche de chrome, une couche de SiO$_2$ percée d'une ouverture et une couche d'aluminium recouvrant le tout et prenant contact avec la couche supérieure de chrome.

3. Dans l'article intitulé "A 250×240 Element LCD Addressed by Lateral MIM" publié par S. Morozumi et al. dans Japan Display 1983, pp. 404—407, il est décrit un pont comprenant une couche de tantale, un dépôt mince de pentoxyde de tantale, une couche de polyimide et une couche de chrome (structure dite "MIM" pour "Metal-Insulator-Metal").

Bien que donnant satisfaction à certains égards, ces techniques conduisent à des procédés de fabrication complexes. Les deux premières, en particulier, nécessitent 4 photolithographies différentes, donc 4 masques, avec les problèmes d'alignement inévitables que cela pose. La troisième technique ne nécessite que trois photogravures, mais fait appel à une couche isolante très mince difficilement reproductible.

La présente invention a justement pour objet un procédé qui évite ces inconvénients. Grâce à l'invention, il est possible, en deux opérations seulement de photolithographie, de former un pont de diodes entre chaque pavé et la colonne adjacente. Le pont obtenu est formé de deux diodes montées tête-bêche.

Le procédé de l'invention utilise des pavés qui ont une forme rectangulaire avec un appendice (ou deux) qui rappellent ceux qui sont décrits dans le document FR—A—2533072. Mais, dans ce document, le pont conducteur reliant chaque pavé à la colonne adjacente est un transistor en couches minces (TCM), ce qui implique évidemment des opérations et des couches différentes.

De façon précise, l'invention a pour objet un procédé de fabrication d'un écran d'affichage à cristaux liquides et à réseau de diodes, dans lequel pour réaliser la plaque inférieure, on dépose sur un substrat une couche de matériau conducteur transparent, puis une couche d'un premier matériau conducteur et on effectue une première photogravure de ces deux couches pour constituer une matrice de pavés munis d'au moins un appendice et des colonnes de commande; ce procédé étant caractérisé par le fait que, pour créer un pont de diodes entre chaque pavé et la colonne adjacente, on réalise les opérations suivantes:

on dépose une couche de silicium amorphe hydrogéné intrinsèque aSi:H(i) sur l'ensemble de la plaque inférieure,

on dépose un second matériau conducteur, le premier et le second matériaux conducteurs étant choisis pour que l'empilement constitué par ces deux matériaux et la couche en aSi:H(i) intercalaire présente une structure du type diode,

on effectue une deuxième photogravure pour dégager chaque pavé, mais pour laisser subsister:

d'une part, entre chaque appendice et la colonne adjacente un pont formé par l'empilement de la couche du premier matériau conducteur, de la couche de aSi:H(i) et de la couche du second matériau conducteur, ce pont étant équivalent électriquement à deux diodes montées tête-bêche,

d'autre part, le long des colonnes, sur une partie des intervalles séparant deux ponts consécutifs, des segments S dudit empilement.

Dans une variante avantageuse, le premier matériau conducteur est en silicium amorphe dopé n$^+$ et le second matériau conducteur est un métal, ce dernier formant contact Schottky avec le aSi:H(i) qu'il recouvre; les deux diodes formées dans chaque pont sont alors des diodes Schottky.

Selon une autre variante, c'est le premier matériau conducteur qui est un métal formant avec le aSi:H(i) qui le recouvre un contact Schottky et le second matériau conducteur est du silicium amorphe hydrogéné dopé n$^+$; les deux diodes formées dans chaque pont sont encore du type Schottky.

Selon une autre variante, le premier matériau conducteur est du aSi:H dopé p$^+$ (ou n$^+$) et le second matériau conducteur du aSi:H dopé n$^+$ (ou p$^+$); les deux diodes formées dans chaque pont sont alors du type p$^+$in$^+$.

De toutes façons, les caractéristiques et avantages de l'invention apparaîtront mieux après la description qui suit, d'exemples de réalisation donnés à titre explicatif et nullement limitatif. Cette description se réfère à des dessins annexés sur lesquels:

la figure 1, déjà décrite, représente une vue éclatée d'un écran plat d'affichage à cristaux liquides,

la figure 2 représente diverses étapes (a, b, c, d) du procédé de l'invention,

la figure 3 est un schéma électrique équivalent montrant la connexion entre chaque point d'affichage et le couple ligne-colonne correspondant,

la figure 4 montre un détail du segment qui peut subsister sur les colonnes après la seconde photogravure,

la figure 5 montre, en coupe, un tel segment,

la figure 6 illustre une variante à deux ponts pour chaque point d'affichage qui donne une redondance à l'adressage,

la figure 7 représente le schéma électrique correspondant à cette variante,

les figures 8a, 8b, 8c illustrent, en coupe, trois variantes de diodes (Schottky et p-i-n).

Dans la description qui suit, la plaque supérieure de l'écran, telle qu'illustrée sur la figure 1 (référence 10), est passée sous silence, car obtenue par des moyens classiques (dépôt d'une couche d'ITO puis gravure). On s'attachera donc essentiellement par la suite à décrire les moyens d'obtention de la plaque inférieure 20 et des couches qui la recouvrent.

La figure 2 montre quatre étapes de réalisation de cette plaque inférieure. Les opérations effectuées sont les suivantes:

sur un substrat de verre 100, on dépose une couche 102 de matériau conducteur transparent, par exemple en oxyde d'étain et d'indium (ITO), on dépose ensuite, sur l'ensemble, une couche 103 d'un premier matériau conducteur, par exemple en silicium amorphe fortement dopé n (partie a),

on effectue une première photogravure de ces deux couches pour constituer une mosaïque de pavés 106 rangés en lignes et colonnes; chaque pavé est relié à un appendice 108; cette première photogravure laisse subsister, en outre, des colonnes 104 du matériau conducteur transparent 102 surmonté de la couche 103 de silicium amorphe fortement dopé n, ces colonnes s'insérant entre les pavés (partie b),

on dépose une couche 110 de silicium amorphe hydrogéné sur l'ensemble,

on dépose une couche 114 d'un second matériau conducteur, par exemple en platine ou en chrome (partie c),

on effectue une seconde photogravure appliquée à l'ensemble des couches 103, 110, 114 pour dégager chaque pavé 106, mais laisser subsister des ponts 116 et des segments S sur les colonnes, sur une partie de l'intervalle séparant des ponts consécutifs (partie d),

on dépose une couche de SiO$_2$ destinée à passiver l'ensemble (non représentée).

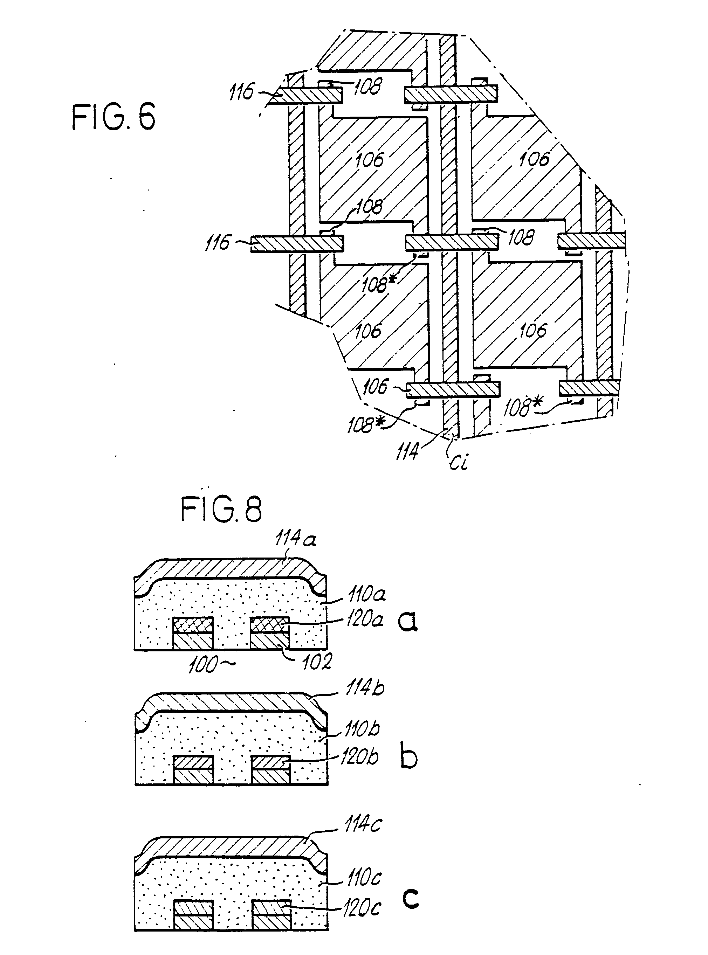

Les couches 103-110-114 sont choisies de telle sorte qu'une structure de type diode soit formée. On peut choisir, par exemple, pour second matériau conducteur 114 du platine ou du chrome, qui forment avec le aSi:H de la couche 110 un contact Schottky. Mais d'autres combinaisons sont possibles, comme on le verra mieux à propos des figures 8a, b et c.

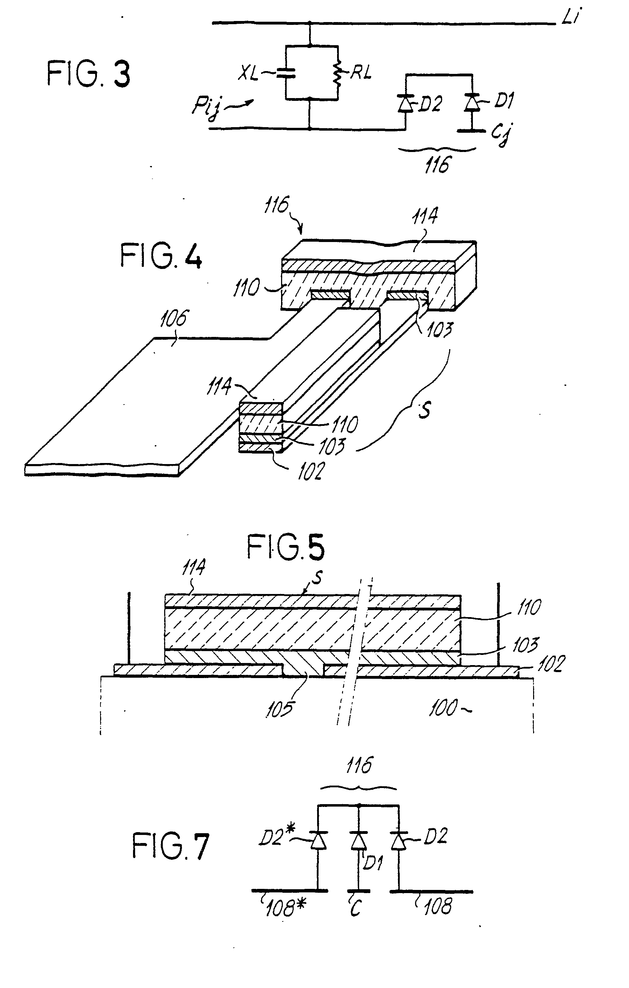

Quel que soit le mode de réalisation retenu, on obtient une première diode en regard de chaque appendice 108 et une seconde diode en regard de chaque colonne, ces deux diodes étant disposées de manière semblable. Le schéma électrique équivalent d'un point d'affichage Pij est représenté sur la figure 3. Ce point est équivalent à un condensateur dont les armatures sont constituées par le pavé de la plaque inférieure et la partie de la ligne située en regard de ce pavé sur la plaque supérieure, ce condensateur ayant une capacité XL, avec une résistance en parallèle de valeur RL. Ce dipôle RC est relié, d'une part, à la ligne Li et, d'autre part, à travers le point 116, à la colonne Cj, ce pont comprenant deux diodes D1, D2 montées tête-bêche.

La figure 4 représente en perspective les couches obtenues au niveau d'un pont 116 et d'un segment S. On y voit l'empilement 103-110-114 formant le pont de diodes tête-bêche entre une colonne et le pavé voisin et un segment S recouvrant partiellement une colonne.

La figure 5 permet de mieux comprendre comment l'empilement qui subsiste sur les colonnes peut jouer, en cas de coupure de la colonne, le rôle de pont conducteur entre les deux parties de la colonne. Sur cette figure, on voit une colonne présentant une coupure 105. Le pont conducteur formé par le segment S et notamment par la couche conductrice 103 rétablit la continuité électrique.

Cet artifice présente un autre avantage: l'empilement S produit un masquage optique de la colonne. Si cette colonne n'est pas masquée, elle est visible au même titre qu'un point d'affichage. Son aspect dépend de la valeur moyenne de la tension vidéo pendant une image. Cet effet est très gênant dans le mode d'affichage blanc sur fond noir, car l'oeil est très sensible aux lignes blanches, même très fines. Dans l'autre mode, noir sur fond blanc, l'effet est beaucoup moins visible, une ligne noire de 20 µm de large sur fond blanc étant invisible à l'oeil. Le masquage optique des colonnes transparentes est donc nécessaire surtout dans le premier mode et il est parfaitement obtenu par l'invention.

On notera que la réalisation de ce segment n'introduit aucune opération particulière, puisque c'est simplement le dessin du second niveau de masquage qui doit être prévu en conséquence.

Dans la description qui précède, chaque pavé 106 est associé à un appendice 108, par l'intermédiaire duquel se fait la connexion électrique avec la colonne qui précède. Dans un autre mode de réalisation, chaque pavé comprend un second appendice 108*, diagonalement opposé au premier et permettant une connexion électrique avec la colonne qui suit. Chaque pavé est alors relié par deux ponts de diodes tête-bêche aux colonnes d'adressage.

L'intérêt de cette disposition est que, si l'une des colonnes d'adressage est coupée, le point peut quand même être excité par l'autre colonne. Pour qu'un point soit inaccessible, il faudrait que les deux colonnes qui l'encadrent soient simultanément coupées, ce qui, statistiquement, est peu probable.

Cette disposition ne complique en rien le procédé de fabrication de l'écran d'affichage. Il suffit de prévoir, lors de la première photogravure, la formation d'un second appendice et, lors de la seconde photogravure, la formation d'un point de diodes plus allongé.

La figure 6 illustre cette disposition. Chaque pavé 106 comprend un premier appendice 108 dans le coin supérieur gauche et un second appendice 108* dans le coin inférieur droit. Chaque pont 116 relie une colonne de rang j à l'appendice 108 du pavé correspondant à la ligne i et situé à droite de la colonne j et à l'appendice 108* du pavé correspondant à la ligne i−1 situé à gauche de la colonne j.

La figure 7 montre le schéma électrique équivalent d'un tel pont: la diode D1 au niveau de la colonne C et les diodes D2, D2* au niveau des appendices 108 et 108*.

Naturellement, la présence du deuxième pont de diode D1—D2* modifie légèrement le processus d'adressage de chaque point, en ce sens que le point excité Pij, au lieu de mémoriser l'excitation correspondant à la ligne Li et à la colonne Cj, mémorisera la dernière excitation reçue, en l'occurrence la deuxième (s'il n'y a pas de coupure), qui correspond à la ligne Li+1 et à la colonne Cj+1. Mais cette modification est, dans la plupart des cas, sans importance, puisqu'elle revient simplement à décaler l'image affichée d'un intervalle ligne et d'un intervalle colonne.

Les figures 2, 4 et 5 correspondaient à un cas où le premier matériau conducteur 103 était en aSi:H dopé n⁺ et le second matériau conducteur 114 un métal (Pt ou Cr). Mais cette disposition n'est pas la seule. Les figures 8a à 8c illustrent trois autres modes de réalisation du pont de diodes:

sur la figure 8a, la couche 120a est en métal (Pt, Cr), la couche 110a en aSi:H intrinsèque et la couche 114a en aSi:H dopé $n^+$; les diodes formées sont alors du type Schottky,

sur la figure 8b, la couche 120b est en aSi:H dopé $p^+$, la couche 110b en aSi:H(i) et la couche 114b en aSi:H dopé $n^+$; les diodes formées sont alors du type $p^+$-i-$n^+$,

sur la figure 8c, la couche 120c est en aSi:H dopé $n^+$, la couche 110c en aSi:H(i) et la couche 114c en aSi:H dopé $p^+$, les diodes sont encore de type $p^+$-i-$n^+$.

La couche 102 demeure en ITO dans les trois cas de figure.

**Revendications**

1. Procédé de fabrication d'un écran d'affichage à cristaux liquides et à réseau de diodes, dans lequel:

on réalise une plaque supérieure (10) à l'aide d'un substrat recouvert de lignes de commande conductrices et transparentes (12),

on réalise une plaque inférieure (20) en déposant sur un substrat (100) une couche de matériau conducteur transparent (102) puis une couche d'un premier matériau conducteur (103) et en effectuant une première photogravure de ces deux couches pour constituer une matrice de pavés (106) munis d'au moins un appendice (108), chaque pavé (106) constituant, un point élémentaire d'affichage, et pour constituer des colonnes de commande (104) intercalées entre les colonnes de pairés,

on relie chaque pavé (106) à une colonne de commande (104) adjacente par un pont (116) comprenant deux diodes,

on assemble les deux plaques (10, 20) obtenues de telle manière que les lignes de la plaque supérieure recouvrent les lignes de pavés de la matrice et soient perpendiculaires aux colonnes de la plaque inférieure, ce procédé étant caractérisé par le fait que, pour créer un pont (116) entre chaque pavé et la colonne de commande adjacente, on réalise les opérations suivantes:

on dépose une couche (110) de silicium amorphe hydrogéné intrinsèque aSi:H(i) sur l'ensemble de la plaque inférieure après la première photogravure,

on dépose un second matériau conducteur (114), le premier (103) et le second (114) matériaux conducteurs étant choisis pour que l'empilement constitué par ces deux matériaux et la couche (110) en aSi:H(i) intercalaire présente une structure du type diode,

on effectue une deuxième photogravure pour dégager chaque pavé, mais pour laisser subsister:

d'une part, entre chaque appendice et la colonne adjacente, un pont formé par l'empilement de la couche (103) du premier matériau conducteur, de la couche (110) de aSi:H(i) et de la couche (114) du second matériau conducteur, ce pont étant équivalent électriquement à deux diodes (D1, D2) montées tête-bêche,

d'autre part, le long des colonnes et sur une partie des intervalles séparant deux ponts consécutifs, des segments (S) dudit empilement.

2. Procédé selon la revendication 1, caractérisé par le fait que le premier matériau conducteur (103) est en silicium amorphe dopé n⁺ et que le second matériau conducteur (114) est un métal, ce dernier formant contact Schottky avec le aSi:H(i) qu'il recouvre, les deux diodes formées dans chaque pont étant alors des diodes Schottky.

3. Procédé selon la revendication 1, caractérisé par le fait que le premier matériau conducteur (103) est un métal formant avec le aSi:H(i) qui le recouvre un contact Schottky et que le second matériau conducteur (114) est du silicium amorphe hydrogéné dopé n⁺, les deux diodes formées dans chaque pont étant du type Schottky.

4. Procédé selon l'une quelconque des revendications 2 et 3, caractérisé par le fait que le métal est du platine ou du chrome.

5. Procédé selon la revendication 1, caractérisé par le fait que le premier matériau conducteur (103) est du aSi:H dopé p⁺ et le second matériau conducteur (114) du aSi:H dopé n⁺, les deux diode formées dans chaque pont étant du type p⁺-i-n⁺.

6. Procédé selon la revendication 1, caractérisé par le fait que le premier matériau conducteur (103) est du aSi:H dopé n⁺ et le second matériau conducteur (114) du aSi:H dopé p⁺, les deux diodes formées dans chaque pont étant du type p⁺-i-n⁺.

7. Procédé selon la revendication 1, caractérisé par le fait que chaque pavé (106) comprend deux appendices (108, 108*) diagonalement opposés et disposés de part et d'autre du pavé et le long de deux colonnes adjacentes et par le fait que, lors de la seconde photogravure, on laisse subsister des ponts qui relient chaque colonne (C) aux deux appendices (108, 108*) qui l'encadrent.

**Patentansprüche**

1. Verfahren zur Herstellung einer Flüssigkristall-Anzeigevorrichtung mit einer Diodenmatrix, bei dem:
man eine obere Platte (10) mittels eines mit transparenten Steuerleitungen (12) bedeckten Substrats herstellt,
man eine untere Platte (20) durch Aufbringen auf einem Substrat (100) einer Schicht aus leitfähigem, transparentem Material (102) und dann einer Schicht eines ersten leitfähigen Materials (103) und durch eine erste Photoätzung dieser beiden Schichten zum Bilden einer Matrix aus Bausteinen (106) mit wenigstens einem Fortsatz (108), wobei jeder Baustein (106) einen elementaren Anzeigepunkt darstellt, und zum Bilden von Steuerspalten (104), die zwischen den Bausteinspalten angeordnet sind, herstellt,
man jeden Baustein (106) mit einer angrenzenden Steuerspalte (104) mittels eine Brücke (116) mit zwei Dioden verbindet,
man die beiden erhaltenen Platten derart zusammenfügt, daß die Leitungen der oberen Platte die Reihen der Bausteine der Matrix bedekken und senkrecht zu den Spalten der unteren Platte stehen, wobei das Verfahren gekennzeichnet ist durch die Tatsache, daß man zur Herstellung einer Brücke (116) zwischen jeden Baustein und der benachbarten Steuerspalte folgende Schritte durchführt:
man bringt eine Schicht (110) aus amorphem, Wasserstoff enthaltenden, intrinsischem Silizium aSi:H(i) auf die gesamt untere Platte nach der ersten Photoätzung auf,
man bringt ein zweites leitendes Material (114) auf, wobei das erste (103) und das zweite (114) leitende Material so gewählt sind, daß die Übereinanderschichtung dieser beiden Materialien und der Zwischenschicht (110) aus aSi:H(i) eine Struktur des Diodentyps darstellt,
man führt eine zweite Photoätzung zum Freilegen jedes Bausteins durch, man läßt jedoch bestehen:
einerseits, zwischen jedem Fortsatz und der angrenzenden Spalte eine aus der Übereinanderschichtung der Schicht (103) des ersten leitfähigen Materials, der Schicht (110) aus aSi:H(i) und der Schicht (114) des zweiten leitfähigen Materials gebildete Brücke, wobei diese Brücke elektrisch zwei gegeneinandergeschalteten Dioden (D1, D2) äquivalent ist,
andererseits, entlang der Spalten und auf einem Teil der Zwischenräume, die zwei aufeinanderfolgende Brücken trennen, Segmente (S) der Übereinanderschichtung.

2. Verfahren nach Anspruch 1, gekennzeichnet durch die Tatsache, daß das erste leitfähige Material (103) ein Metall ist, das mit dem aSi:H(i), das es bedeckt, einen Schottkykontakt bildet, und daß das zweite leitfähige Material (114) ein Metall ist, wobei letzteres einen Schottkykontakt mit dem aSi:H(i) bildet, das es bedeckt, wobei also die beiden in jeder Brücke gebildeten Dioden Schottkydioden sind.

3. Verfahren nach Anspruch 1, gekennzeichnet durch die Tatsache, daß das erste leitfähige Material (103) ein Metall ist, das mit dem aSi:H(i), das es bedeckt, einen Schottkykontakt bildet, und daß das zweite leitfähige Material (114) amorphes, Wasserstoff enthaltendes, n⁺-dotiertes Silizium ist, wobei die beiden in jeder Brücke gebildeten Dioden Schottkydioden sind.

4. Verfahren nach einem der Ansprüche 2 und 3, gekennzeichnet durch die Tatsache, daß das Metall Platin oder Chrom ist.

5. Verfahren nach Anspruch 1, gekennzeichnet durch die Tatsache, daß das erste leitfähige Material (103) p⁺-dotiertes aSi:H und das zweite leitfähige Material (114) n⁺-dotiertes aSi:H ist, wobei die beiden in jeder Brücke gebildeten Dioden von Typ p⁺-i-n⁺ sind.

6. Verfahren nach Anspruch 1, gekennzeichnet durch die Tatsache, daß das erste leitfähige Material (103) n⁺-dotiertes aSi:H und das zweite leitfähige Material (114) p⁺-dotiertes aSi:H ist, wobei die beiden in jeder Brücke gebildeten Dioden von Typ p⁺-i-n⁺ sind.

7. Verfahren nach Anspruch 1, gekennzeichnet durch die Tatsache, daß jeder Baustein (106) zwei diagonal gegenüberliegende und auf der einen und anderen Seite des Bausteins entlang der beiden abgrenzenden Spalten angeordnete Fortsätze (108, 108*) aufweist und daß man während der zweiten Photoätzung Brücken, die jede Spalte (C) mit den beiden Fortsätzen (108, 108*), die sie umgeben, verbinden, stehen läßt.

## Claims

1. Process for the production of a diode array and liquid crystal display screen in which:
an upper plate (10) is produced with the aid of a substrate covered by transparent, conductive control rows (12),
a lower plate (20) is produced by depositing on a substrate (100) a transparent, conductive material layer (102), followed by a first conductive material layer (103) and carrying out a first photogravure process on these two layers to form a matrix of blocks (106) having at least one projection (108), each block (106) constituting an elementary display point, as well as for forming control columns (104) placed between the blocks,
each block (106) is connected to an adjacent control column (104) by a bridge (116) having two diodes,
the two plates (10, 20) obtained are assembled in such a way that the rows of the upper plate cover the rows of blocks of the matrix and are perpendicular to the columns of the lower plate, said process being characterized in that for producing a bridge (116) between each block and the adjacent control column, the following operations are performed:
an intrinsic hydrogenated amorphous silicon layer (110) aSi:H(i) is deposited on the lower plate following the first photogravure operation,
a second conductive material (114) is deposited, the first (103) and second (114) conductive materials being chosen in such a way that the stack constituted by these two materials and the interposed aSi:H(i) layer (110) has a diode-type structure,
a second photogravure operation is performed for freeing each block, but leaving on the one hand between each projection and the adjacent column a bridge formed by the stack of the layer (103) of the first conductive material, the aSi:H(i) layer (110) and the layer (114) of the second conductive material, said bridge being electrically equivalent to two diodes (D1, D2) connected in head to tail manner and on the other hand, along the columns and on part of the gaps separating two consecutive bridges, segments (S) of said stack.

2. Process according to claim 1, characterized in that the first conductive material (103) is of $n^+$-doped amorphous silicon and the second conductive material (114) is a metal, the latter forming a Schottky contact with the aSi:H(i) which it covers, the two diodes formed in each bridge then being Schottky diodes.

3. Process according to claim 1, characterized in that the first conductive material (103) is a metal forming with the aSi:H(i) which it covers a Schottky contact and in that the second conductive material (114) is $n^+$-doped hydrogenated amorphous silicon, the two diodes formed in each bridge being of the Schottky type.

4. Process according to either of the claims 2 and 3, characterized in that the metal is of platinum or chromium.

5. Process according to claim 1, characterized in that the first conductive material (103) is of $p^+$-doped aSi:H and the second conductive material (114) is of $n^+$-doped aSi:H, the two diodes formed in each bridge being of type $p^+$-i-$n^+$.

6. Process according to claim 1, characterized in that the first conductive material (103) is $n^+$-doped aSi:H and the second conductive material (114) is of $p^+$-doped aSi:H, the two diodes formed in each bridge being of the $p^+$-i-$n^+$ type.

7. Process according to claim 1, characterized in that each block (106) comprises two diagonally opposite projections (108, 108*) disposed on either side of the block (106) and along two adjacent columns and in that during the second photogravure operation, bridges connecting each column (C) to the two surrounding projections (108, 108*) are left behind.

FIG.1

FIG.2

FIG. 3

Li

Pij

XL — RL

D2 — D1

Cj

116

FIG. 4

116

114

110

106

103

114

110

103

102

S

FIG. 5

114

S

110

103

102

105

100

FIG. 7

116

D2* — D1 — D2

108* — C — 108

2

FIG.6

116 — 108
116 —
106          106
108
108
116 —          108          108
                108*
108*
106          106
106
108*          108*
108*
114
Ci

FIG.8

114a
110a
120a   a
100~   102

114b
110b
120b   b

114c
110c
120c   c